# EUROPEAN PATENT SPECIFICATION

(11) **EP 3 525 541 B1**
(45) Date of publication and mention of the grant of the patent: **14.08.2024**
(21) Application number: 18156230.7
(22) Date of filing: 12.02.2018
(51) Int. Cl.: H04W 72/23, H04W 72/21

(54) **SCHEDULING METHOD, BASE STATION FOR A CELLULAR NETWORK AND CELLULAR SYSTEM**
ZEITPLANUNGSVERFAHREN, BASISSTATION FÜR EIN ZELLULARES NETZWERK UND ZELLULARES SYSTEM
PROCÉDÉ DE PLANIFICATION, STATION DE BASE POUR RÉSEAU CELLULAIRE ET SYSTÈME CELLULAIRE

(43) Date of publication of application: 14.08.2019
(73) Proprietor: Rohde & Schwarz GmbH & Co. KG, 81671 München (DE)
(72) Inventor: RADDINO, Daniela, 80469 München (DE); JOSHI, Ajan, 64287 Darmstadt (DE)
(74) Representative: Novagraaf Group

(56) References cited:
- INTEL CORPORATION: "Enhancement of SR/BSR", vol. RAN WG2, no. Hangzhou, China; 20170515 - 20170519, 14 May 2017 (2017-05-14), XP051275304, Retrieved from the Internet <URL:http://www.3gpp.org/ftp/Meetings_3GPP_SYNC/RAN2/Docs/> [retrieved on 20170514]
- QUALCOMM INCORPORATED: "L1 Signaling for GF UL transmission", vol. RAN WG1, no. Nagoya, Japan; 20170918 - 20170921, 17 September 2017 (2017-09-17), XP051339886, Retrieved from the Internet <URL:http://www.3gpp.org/ftp/Meetings_3GPP_SYNC/RAN1/Docs/> [retrieved on 20170917]

## Description

The invention relates to a scheduling method for scheduling user equipments in a cellular network as well as a base station for a cellular network. Further, the invention provides a cellular system for establishing a cellular network.

Nowadays, the 4G telecommunication standard is typically used by current cellular networks wherein the respective standard is also often called long term evolution (LTE), LTE Advanced, LTE Plus or 4GPlus. In fact, LTE does not fulfill the requirements of the 4G telecommunication standard with regard to the defined capabilities even though it is often deemed as doing so. In general, the 4G telecommunication standard corresponds to the fourth generation of broadband cellular network technology that succeeds the former 3G telecommunication standard.

The next telecommunication standard under development that will succeed the current 4G telecommunication standard is called 5G or New Radio (NR). The 5G telecommunication standard has already been defined for different usage scenarios with regard to the desired capabilities such as latency, throughput, availability, peak data rate, energy efficiency and so on. However, it is not clear at the moment how the capabilities defined should be reached, for instance the desired over-the-air latency of 1 ms for a certain usage scenario called ultra-reliable low latency communication inter alia used for transportation services, in particular the safety requirements related to the transportation services. The over-the-air latency relates to the time from when a source sends a (data) packet to when a receiver receives the (data) packet.

In the paper "Enhancement of SR/BSR" issued under R2-1704784 SR BSR at a RAN WG2 meeting as well as the paper "L1 Signaling for GF UL transmission" issued under R1-1716431 at a RAN WG1 meeting, it is described that user equipments are scheduled due to the buffer status of the respective user equipment.

Accordingly, it is an object of the invention to provide a method as well as a base station that are enabled to reach the desired requirements with regard to latency.

The invention provides a scheduling method for scheduling user equipments in a cellular network, in particular a new radio network such as a 5G network, comprising the following steps:
- connecting at least two user equipments to a base station, wherein the user equipments communicate their respective connection types assigned to a maximum latency allowed respectively,
- each user equipment transmitting a scheduling request message to the base station, wherein each scheduling request message comprises a buffer status of the respective user equipment, and
- the base station granting uplink resources in time and frequency domains for each of the at least two user equipments based on their connection types and their buffer status', wherein scheduling takes place in every slot.

The base station schedules the uplinks of each of the at least two user equipments in a time below a predetermined minimum time, wherein the predetermined minimum time is within the latency requirement defined by the connection type having the strictest requirement with regard to the latency.

Further, the invention provides a base station for a cellular system establishing a cellular network, in particular a new radio network such as a 5G network, comprising an interface for establishing connections with user equipments and a scheduler unit connected to the interface, wherein the scheduler unit is configured to process scheduling request messages of the user equipments, wherein the scheduling request messages comprise a buffer status of the respective user equipment, and wherein the scheduler unit is configured to schedule uplink resources in time and frequency domains for the user equipments based on their buffer status' transmitted and connection types of the respective user equipments, which are assigned to a maximum latency allowed respectively. The scheduler unit is configured to adapt the slot length, the length of the transmission time and/or the bandwidth assigned to each user equipment depending on the subcarrier spacing and/or the buffer status' of the user equipments. The base station schedules the uplinks of each of the at least two user equipments in a time below a predetermined minimum time, wherein the predetermined minimum time is within the latency requirement defined by the connection type having the strictest requirement with regard to the latency.

The invention is based on the finding that the scheduling of the user equipments is based on the respective parameters such as connection type and buffer status. As the connection type and the buffer status of the respective user equipment are used for scheduling purposes, it is ensured that the scheduling can be done in a more advanced manner as the connection type of the user equipment is also taken into account. The connection type is assigned to a maximum latency allowed such that the respective buffer information (buffer status) as well as the required maximum latency (via the connection type) are considered when assigning the uplink resources available to the different user equipments connected to the base station. In fact, the respective scheduler unit used for the new radio network, in particular the 5G telecommunication standard, is configured to take the buffer information (buffer status) as well as the required latency (via the connection type) into account.

In contrast thereto, the current 4G telecommunication standard does not schedule the user equipments or rather assign uplink resources to the user equipments depending on the parameters mentioned above, in particular the respective connection type of the user equipment(s).

In general, the scheduling relates to assigning time and a frequency bandwidth to the respective user equipment transmitting a scheduling request message. In other words, an uplink resource is assigned to each user equipment requesting to transmit data in the cellular network. In fact, the time and the frequency bandwidth correspond to the respective uplink resource.

Generally, the user equipment may be a mobile (end) device such as a mobile phone, a smartphone, a tablet or generally a participant of a cellular system establishing the cellular network. For instance, the user equipment can be a car, particularly a self-driving car.

The cellular network may also be called wireless cellular network for emphasizing the cable-free character of the cellular network.

Hence, the base station is configured to process the scheduling request messages of the user equipments in every slot such that the strict latency requirements can be fulfilled that are defined for some usage scenarios of the 5G telecommunication standard. As the scheduling takes place in every slot, sporadically upcoming scheduling request messages can be processed so that the uplink resources are assigned to the respective user equipments.

In general, a slot corresponds to a time interval that can be used for data transmission. Several slots may be provided in a subframe wherein several subframes are provided in a frame.

The number of slots provided in each subframe depends on the subcarrier spacing used wherein one subcarrier spacing in frequency domain is also defined as numerology.

Generally, the subcarrier spacing may differ as multiple types of subcarrier spacings are available in contrast to the 4G telecommunication standard comprising only one specific subcarrier spacing, namely a subcarrier spacing of 15 kHz. In fact, the subcarrier spacing used is scalable.

For instance, the scalable subcarrier spacing is between 15 kHz and 480 kHz such that six different subcarrier spacings can be used, namely 15 kHz, 30 kHz, 60 kHz, 120 kHz, 240 kHz and 480 kHz.

The different subcarrier spacings correspond to 1 to 32 slots per subframe depending on the respective subcarrier spacing used. In fact, a subcarrier spacing of 15 kHz is assigned to one slot per subframe whereas a subcarrier spacing of 480 kHz is assigned to 32 slots per subframe.

In addition to this, each slot may comprise a number of symbols used for transmission purposes, for instance orthogonal frequency-division multiplex (OFDM) symbols. Hence, the number of (OFDM) symbols per slot may also vary depending on the subcarrier spacing used.

The amount of time resources allocated to a user equipment is also called Transmission Time Interval (TTI or simply T). The TTI corresponds to a number of consecutive symbols for one transmission in the time domain. The length of the TTI or rather the TTI duration may also vary. The length of the TTI may depend on the subcarrier spacing used as well as the buffer status' of the user equipments submitted.

In fact, a Transmission Time Interval may correspond to a part of a slot (mini-slot), a slot and/or several slots. This may also depend on the subcarrier spacing used.

The frame length may be fixed to 10 ms whereas the length of the subframe may be fixed to 1 ms such that the length of one TTI and/or the length of one slot may be equal to or shorter than 1 ms.

Thus, the scheduling is done by the base station, in particular the integrated scheduler unit, in a more flexible manner in order to ensure that the strict latency requirements of certain usage scenarios of the 5G telecommunication standard are fulfilled appropriately.

As mentioned, the base station schedules the uplinks of each of the at least two user equipments in a time below a predetermined minimum time. The predetermined minimum time is chosen such that the connection type having the strictest requirement with regard to the latency can be used, namely within the latency requirement defined by the connection type. As mentioned above, the 5G telecommunication standard requires an over-the-air latency of 1 ms for a certain connection type (usage scenario) called ultra-reliable low latency communication. The over-the-air latency may correspond to the so-called user plane latency, namely the time it takes to successfully deliver a (data) packet from/to the radio protocol layer 2/3 in both uplink and downlink directions.

As the base station schedules the uplinks of each of the at least two user equipments, the respective downlink resources in time and frequency domains are assigned to the at least two user equipments in a time below the predetermined minimum time.

The predetermined minimum time may equal 1 ms, in particular 0.5 ms. Hence, the requirement of the 5G telecommunication standard with regard to latency for strict usage scenarios can be fulfilled appropriately provided that the uplinks of each of the at least two user equipments are scheduled by the base station in a time being lower than 1 ms, in particular lower than 0.5 ms for having a buffer with regard to the processing time.

For instance, the connection type corresponds to an ultra-reliable low latency communication (URLLC). This connection type corresponds to one of several connection types defined for the 5G telecommunication standard. The ultra-reliable low latency communication has very strict requirements with regard to latency, in particular the over-the-air latency, and mobility. Besides these requirements, the ultra-reliable low latency communication also has strict requirements regarding the availability (reliability). In general, the ultra-reliable low latency communication or rather the corresponding usage scenario processes delay-sensitive data. Hence, the latency requirements have to be strict for this usage scenario. For instance, self-driving cars may use this connection type for communicating with an appropriate base station. Generally, the ultra-reliable low latency communication can be used for services with transportation safety requirements.

Alternatively, other connection types (usage scenarios) such as a machine type communication, in particular massive machine type communication, and a mobile broadband, in particular enhanced mobile broadband, may be used in the cellular network established by the cellular system.

The (massive) machine type communication (mMTC) corresponds to a use case (usage scenario) characterized by a large number of connected user equipments typically transmitting low (data) volume of non-delay-sensitive data. For instance, this connection type is used in the environment of a smart city wherein the respective participants of the smart city network communicate with each other for exchanging data.

The (enhanced) mobile broadband (eMBB) corresponds to human-centric use cases as multi-media content, respective services and data related thereto are accessed. For instance, hotspot environments relate to this usage scenario defined by a high density of user equipments and a high traffic capacity required wherein the requirement for mobility is low. However, wide area coverage also relates to this usage scenario wherein the wide area coverage requires a seamless coverage and medium to high mobility.

In contrast thereto, small (data) packets are typically transmitted in the ultra-reliable low latency communication, in particular in a sporadic manner. However, the respective (data) packet has to be transmitted as soon as it is available in the buffer of the respective user equipment. In other words, the respective user equipments cannot afford to wait to be scheduled. Accordingly, the latency requirement has to be strict which affects the scheduling of the user equipments appropriately. In fact, neither eMBB nor mMTC has strict requirements on latency. For instance, the latency requirement of eMBB is in the range of 4 ms.

The buffer status may refer to a buffer of the respective user equipment, wherein the buffer is a memory of the user equipment for data intended to be sent by the user equipment. Hence, the user equipment transmits the information with regard to the data intended to be sent to the base station prior to sending the data in order to ensure that the base station is able to schedule the uplink resources appropriately.

In general, the user equipment cannot transmit any (data) packets until the uplink resource was granted by the base station, in particular by the scheduler unit.

According to another aspect, the buffer status is transmitted in each slot. Hence, the base station is regularly informed about the status of the respective user equipments in each slot such that the scheduling of the user equipments connected to the base station can be improved. The base station is enabled to react fast, in particular on sporadically upcoming requests or rather participants of the cellular network.

The slot length may be flexible, wherein the slot length is adapted to the subcarrier spacing used. In contrast to the 4G telecommunication standard that uses a slot length being fixed and scheduled every two slots, the slot length in the 5G telecommunication standard may change depending on the subcarrier spacing used. For example, a slot length is 1 ms in case of a subcarrier spacing of 15 kHz. In case of a higher subcarrier spacing, the slot length is shorter so that the latency requirement can be fulfilled easier.

As already described above, the slot length depends on the subcarrier spacing. The slot length may be between 1 ms (subcarrier spacing of 15 kHz) and 31,25 µs (subcarrier spacing of 480 kHz).

According to an embodiment, the bandwidth assigned to each user equipment depends on the buffer status of the respective user equipment. Hence, the scheduling takes the buffer status of the user equipments into account that transmit their scheduling request messages. Depending on the respective buffer status', certain bandwidth portions are assigned to the user equipments for uplink resources.

For instance, the bandwidth available is split proportionally to the buffer status' of the user equipments in a slot. Hence, the number of user equipments to be handled per slot is taken into account as well as their respective buffer status'. The overall bandwidth available is split proportionally such that it is ensured that each user is assigned to a bandwidth fulfilling his needs in an optimal manner.

In fact, the bandwidth available corresponds to a number of Physical Resource Blocks (PRB). Hence, the total number of PRB is split proportionally for each TTI depending on the number of user equipments in the respective TTI as well as their buffer status'.

In addition, the length of the transmission time interval may be adapted depending on the buffer status' of the user equipments. Hence, the length of the transmission time interval is flexible. Thus, more flexibility is ensured for users (user equipments) having a bad radio connection and/or a low Modulation and Coding Scheme (MCS). In contrast thereto, the length of the transmission time interval with regard to the 4G telecommunication standard was fixed to 14 (OFDM) symbols. The flexible length of the transmission time interval ensures that the scheduling can be done in a more flexible manner.

The base station may be a g node B. The g node B (gNB) corresponds to the new radio access technology, namely 5G telecommunication standard. In fact, gNB replaces eNB used for the 4G telecommunication standard that has replaced NodeB used for the 3G telecommunication standard.

Further, the invention provides a cellular system for establishing a cellular network, wherein the cellular system comprises at least a base station as described above and/or wherein the cellular system is configured to perform a method as described above.

Particularly, the base station (of the cellular system) is configured to perform the method as described above.

The invention will now be described with reference to the enclosed drawings. In the drawings,
- Figure 1 schematically shows a communication system comprising a base station according to a certain embodiment of the invention,
- Figure 2 shows a schematic diagram illustrating the principle of scheduling the user equipments in the time and frequency domains according to the invention,
- Figure 3 shows a diagram illustrating the scheduling in the time and frequency domains according to a first embodiment,
- Figure 4 shows a diagram illustrating the scheduling in the time and frequency domains according to a second embodiment,
- Figure 5 shows a diagram illustrating the scheduling in the time and frequency domains according to a third embodiment,
- Figure 6 shows a diagram illustrating the scheduling in the time and frequency domains according to a fourth embodiment, and
- Figure 7 shows an overview representing the steps of the scheduling method according to the invention.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed.

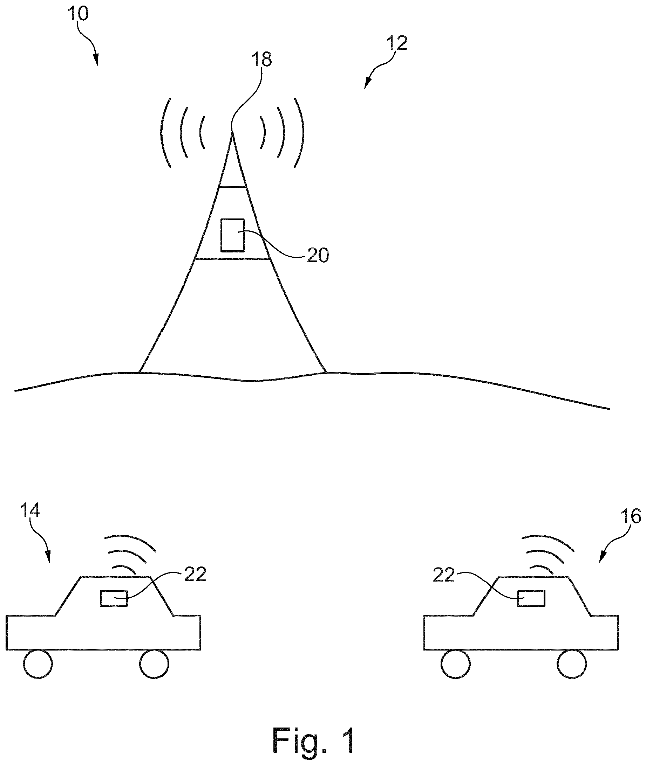

In Figure 1, a cellular system 10 is shown that establishes a cellular network, in particular a New Radio (NR) cellular network referring to the 5G telecommunication standard.

In the shown embodiment, the cellular system 10 comprises a base station 12 provided by a transmission mast and two user equipments 14, 16 that are connected to the base station 12 via the cellular network established by the cellular system 10. Generally, a plurality of user equipments 14, 16 may be provided, in particular more than two user equipments 14, 16.

The base station 12 corresponds to a so-called g node B that is used for the 5G telecommunication standard.

In the shown embodiment, the two user equipments 14, 16 are self-driving cars that communicate with the base station 12 via the cellular network. However, the user equipments 14, 16 may also relate to mobile (end) devices of a user such as a mobile phone, a smartphone, a tablet or anything like that.

As shown in Figure 1, the base station 12 comprises an interface 18 that is established by an antenna unit wherein the interface 18 establishes the connections with the respective user equipments 14, 16.

Moreover, the base station 12 comprises a scheduler unit 20 that is connected to the interface 18 for assigning at least one time/frequency resource to the respective user equipments 14, 16 as will be described later.

In general, the information received via the interface 18 such as certain request messages sent by the user equipments 14, 16 are forwarded to the scheduler unit 20 that is configured to process the information received.

The scheduler unit 20 is inter alia configured to process scheduling request messages of the user equipments 14, 16 with which the user equipments 14, 16 request access to uplink resources of the base station 12. In fact, the scheduler unit 20 is configured to process these scheduling request messages in order to assign available uplink resources to the user equipments 14, 16.

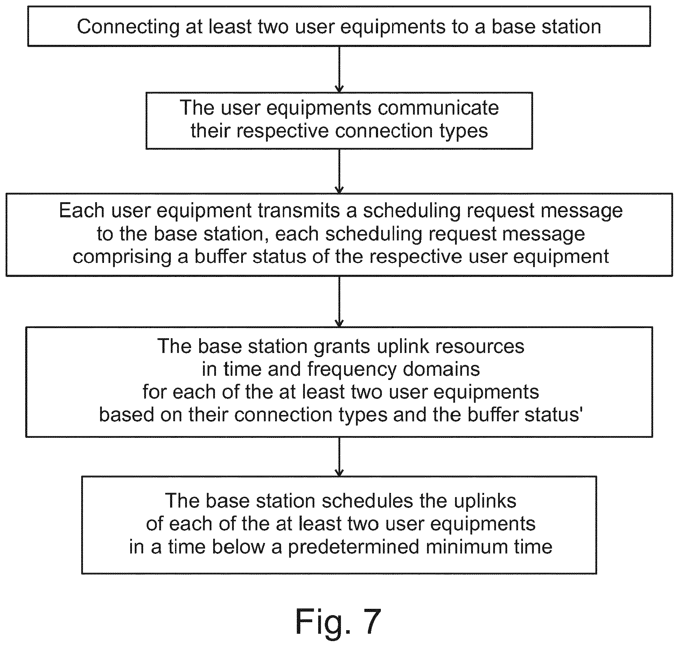

As shown in Figure 7, the user equipments 14, 16 are connected to the base station 12 initially.

Once the user equipments 14, 16 are connected to the base station 12, the user equipments 14, 16 communicate their respective connection type to the base station 12. Hence, the base station 12 receives the information what kind of connection is established by the respective user equipment 14, 16. For instance, the connection type may be ultra-reliable low latency communication wherein this particular connection type requires a maximum latency of 1 ms.

Therefore, the scheduler unit 20 receives the information regarding certain requirements assigned to the connection type, for instance the latency requirement being strict for ultra-reliable low latency communications.

Moreover, each of the user equipments 14, 16 transmits a scheduling request message to the base station 12 in order to obtain dedicated uplink resources as soon as data is provided to be sent. In other words, the respective user equipment 14, 16 transmits the scheduling request message as soon as the (data) packet that has to be transmitted is available in a buffer 22 of the respective user equipment.

Generally, the buffer 22 is a memory of the user equipment 14, 16 for data intended to be sent by the user equipment 14, 16. Hence, the data to be uploaded is stored in the buffer 22.

Each scheduling request message transmitted comprises a buffer status of the respective user equipment 14, 16 with regard to its buffer 22. Hence, the buffer status transmitted by each scheduling request message which indicates the data (volume) intended to be sent by the respective user equipment 14, 16.

The base station 12, in particular the scheduler unit 20, processing the scheduling request messages processes the scheduling request messages received and evaluates the buffer status reports (BSR).

Then, the base station 12, in particular the scheduler unit 20, grants uplink resources in time and frequency domains for each of the user equipments 14, 16 based on their buffer status' as well as the connection types submitted. Accordingly, the base station 12 takes into account the data (volume) intended to be sent as well as the connection type of the respective user equipments 14, 16 as the connection type provides information regarding the maximum latency allowed.

The base station 12, in particular the scheduler unit 20, is configured to schedule the respective uplink resources for the user equipments 14, 16 in a time being lower than a predetermined minimum time that may equal 1 ms or 0.5 ms. Thus, it is ensured that the base station 12, in particular the scheduler unit 20, is configured to schedule the respective uplink resources within a time fulfilling the latency requirements of the 5G telecommunication standard for the particular usage scenario related to the connection type of ultra-reliable low latency communications.

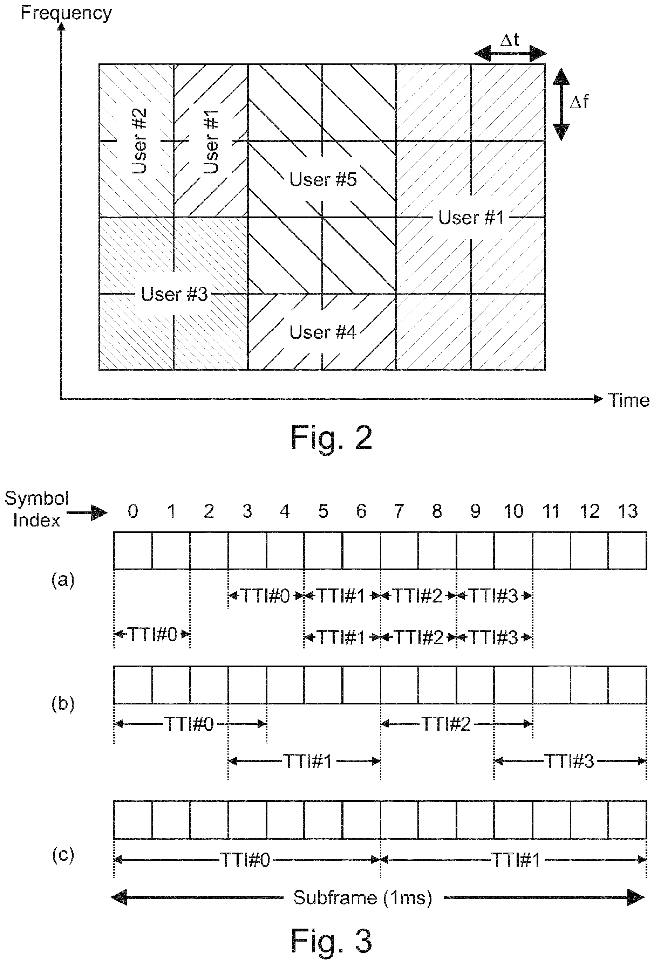

For ensuring the granting of uplink resources, the scheduler unit 20 is generally configured to adapt the length of the transmission time interval (TTI) as well as the bandwidth assigned to each user equipment 14, 16 depending on the respective buffer status as becomes obvious when taking the diagrams shown in Figures 2 to 6 into account.

In Figures 2 to 6, different examples of the resources assignment with regard to the time and frequency domains are shown wherein Figure 2 shows a schematic diagram illustrating the principle of scheduling the user equipments in the time and frequency domains.

Generally, the different examples reveal that the base station 12, in particular the scheduler unit 20, is configured to adapt the length of the transmission time interval (TTI) as well as the bandwidth assigned to each user equipment depending on the respective buffer status (and the number of user equipments).

The schematic diagram of Figure 2 shows that the base station 12 has granted five different users access to the uplink resources in different time/frequency domains.

In Figure 3, three different types of an example are shown in a common overview. This overview reveals that the TTI length can be adapted as it may comprise 2, 4 or seven OFDM symbols, for instance.

In the example shown, a slot length of 1 ms is used as the subcarrier spacing equals 15 kHz. Hence, the slot length corresponds to the length of a subframe in the respective example.

The TTI length is chosen depending on the connection type as well as the buffer status of the user equipments.

For instance, the user equipments labeled with #1 and #2 are granted as much access as needed due to their connection type requiring a short latency. Hence, the user equipments labeled with #1 and #2 may correspond to ultra-reliable low latency communications.

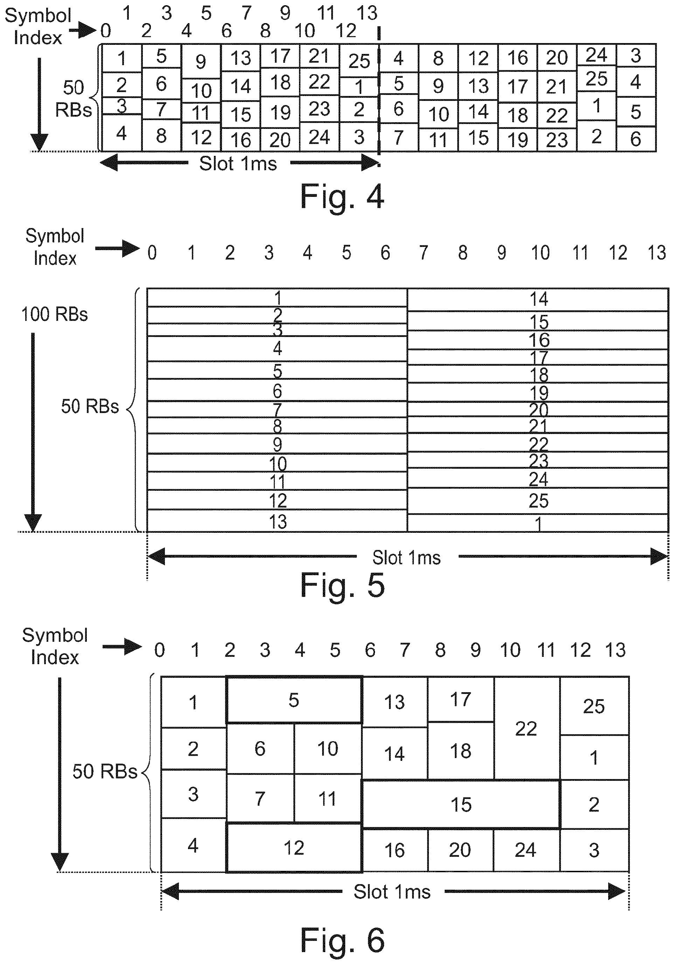

In Figure 4, an example is shown wherein 25 user equipments (1 - 25) are scheduled in time and frequency domains for a subcarrier spacing of 15 kHz and a slot length of 1 ms. In the example shown, a TTI length of 2 (OFDM) symbols is used. This ensures that all users are scheduled in the first slot at least once wherein each slot comprises fourteen (OFDM) symbols. The bandwidth available is assigned to the user equipments appropriately, in particular proportionally to the buffer status' of the user equipments in the slot.

The overall bandwidth available (frequency domain) is split into Physical Resource Blocks (PRBs or in short RBs). Hence, the bandwidth assigned to each user equipment relates to a certain number of RBs. The RBs are proportionally distributed among the user equipments connected to the base station 12 depending on the buffer status' of the user equipments. In Figure 4, the total number of RBs is 50 per symbol that are distributed proportionally among the user equipments.

In Figure 5, another example is shown. Again, 25 user equipments are scheduled in a slot for a slot length of 1 ms due to a subcarrier spacing of 15 kHz. In this example, however, a TTI length of 7 (OFDM) symbols is used for each user equipment. Therefore, the respective bandwidth allocated to each user equipment differs compared to the bandwidth allocated to each user equipment in the example of Figure 4. This becomes obvious when taking the axis into account that relates to the Physical Resource Blocks (PRBs or simply RBs).

In Figure 6, a further example for scheduling user equipments in the time and frequency domains is shown.

Again, 25 different user equipments are scheduled in the slot (slot length of 1 ms and subcarrier spacing of 15 kHz). However, this example reveals that the TTI lengths differ for the respective user equipments. In fact, the user equipment labeled by 5 and 12 are assigned to a TTI length of four (OFDM) symbols and the user equipment labeled by 15 is assigned to a TTI length of five (OFDM) symbols whereas the other user equipments are assigned to a TTI length of two (OFDM) symbols. Accordingly, the TTI length is flexible.

As shown in the example of Figure 6, the TTI length as well as the bandwidth assigned to the respective user equipment 14, 16 can generally be adapted for each user equipment 14, 16 appropriately, for instance in dependency of the buffer status' of the user equipments 14, 16 in the slot (as well as the number of user equipments in the slot).

Accordingly, the overall bandwidth available is split proportionally to the buffer status' of the user equipments 14, 16 (and the number of user equipments 14, 16) per slot, in particular per transmission time interval.

In general, the user equipments 14, 16 submit their scheduling request messages in each slot so that the base station 12, in particular the scheduler unit 20, is configured to schedule the respective uplink resources in time and frequency domains for the user equipments 14, 16 in each slot depending on the buffer status' transmitted as well as the connection types submitted.

Accordingly, the scheduling takes place in every slot such that low latencies can be ensured for certain usage scenarios, in particular for connections related to ultra-reliable low latency communication.

The other connection types such as eMBB and mMTC do not have so strict requirements on latency and, thus, these connection types are used for filling up unused uplink resources available.

Hence, the connection types having strict requirements on latency such as URLLC are scheduled with highest priority.

Then, all other connection types of non-latency critical user equipments are summed up. Then, the uplink resources available are distributed among these non-latency critical user equipments in a proportional manner.

Alternatively, the scheduler unit 20 may select a certain number of non-latency critical user equipments (using a different connection type compared to URLLC) in each slot.

For instance, five non-latency critical user equipments will be selected by the scheduler unit 20, wherein 10 eMBB users and 15 mMTC user equipments each transmit scheduling request messages to the base station 12. Then, the scheduler unit 20 (following a proportional fair approach) grants access to 3 mMTC user equipments and 2 eMBB user equipments, respectively.

In general, the slot length is flexible as it depends on the subcarrier spacing used for transmission purposes. The slot length or rather the subcarrier spacing may be adapted by the base station 12 appropriately, in particular the scheduler unit 20.

As already mentioned, the subcarrier spacing may differ as multiple types of subcarrier spacings are available according to the 5G telecommunication standard. The subcarrier spacing is scalable, for instance. The different subcarrier spacings correspond to 1 to 32 slots per subframe depending on the respective subcarrier spacing used.

Due to the increased flexibility with regard to the scheduling of the user equipments, it is ensured that the user equipments connected to the base station can be scheduled in a very short time. Hence, the strict requirements with regard to latency of the 5G telecommunication standard, in particular the latency requirement for the usage scenario of an ultra-reliable low latency communication, can be fulfilled.

## Claims

1. A scheduling method for scheduling user equipments (14, 16) in a cellular network, comprising the following steps:
- connecting at least two user equipments (14, 16) to a base station (12),
- each user equipment (14, 16) transmitting a scheduling request message to the base station (12), wherein each scheduling request message comprises a buffer status of the respective user equipment (14, 16), and
- the base station (12) granting uplink resources in time and frequency domains for each of the at least two user equipments (14, 16), **characterized in that**
the user equipments (14, 16) communicate their respective connection types assigned to a maximum latency allowed respectively, wherein the base station (12) grants uplink resources in time and frequency domains for each of the at least two user equipments (14, 16) based on their connection types and their buffer status', wherein scheduling takes place in every slot, wherein the base station (12) schedules the uplinks of each of the at least two user equipments (14, 16) in a time below a predetermined minimum time, wherein the predetermined minimum time is within the latency requirement defined by the connection type having the strictest requirement with regard to the latency.

2. The method according to claim 1, **characterized in that** the predetermined minimum time equals 1 ms, in particular 0.5 ms.

3. The method according to any of the preceding claims, **characterized in that** the connection type corresponds to an ultra-reliable low latency communication.

4. The method according to any of the preceding claims, **characterized in that** the buffer status refers to a buffer of the respective user equipment (14, 16), wherein the buffer is a memory of the user equipment (14, 16) for data intended to be sent by the user equipment (14, 16).

5. The method according to any of the preceding claims, **characterized in that** the buffer status is transmitted in each slot.

6. The method according to any of the preceding claims, **characterized in that** the slot length is flexible, wherein the slot length is adapted to the subcarrier spacing used.

7. The method according to any of the preceding claims, **characterized in that** the bandwidth assigned to each user equipment (14, 16) depends on the buffer status of the respective user equipment (14, 16).

8. The method according to any of the preceding claims, **characterized in that** the bandwidth available is split proportionally to the buffer status' of the user equipments (14, 16) in a slot.

9. The method according to any of the preceding claims, **characterized in that** the length of the transmission time interval is adapted depending on the buffer status' of the user equipments (14, 16).

10. The method according to any of the preceding claims, **characterized in that** the base station (12) is a g node B.

11. A base station (12) for a cellular system (10) establishing a cellular network, comprising an interface (18) for establishing connections with user equipments (14, 16), and a scheduler unit (20) connected to the interface (18), wherein the scheduler unit (20) is configured to process scheduling request messages of the user equipments (14, 16), wherein the scheduling request messages comprise a buffer status of the respective user equipment (14, 16), **characterized in that** the scheduler unit (20) is configured to schedule uplink resources in time and frequency domains for the user equipments (14, 16) based on their buffer status' transmitted and connection types of the respective user equipments (14, 16), which are assigned to a maximum latency allowed respectively, and wherein the scheduler unit (20) is configured to adapt the slot length, the length of the transmission time and/or the bandwidth assigned to each user equipment (14, 16) depending on a subcarrier spacing and/or the buffer status' of the user equipments (14, 16), wherein the base station (12) schedules the uplinks of each of the at least two user equipments (14, 16) in a time below a predetermined minimum time, wherein the predetermined minimum time is within the latency requirement defined by the connection type having the strictest requirement with regard to the latency.

12. A cellular system (10) for establishing a cellular network, wherein the cellular system comprises at least a base station (12) according to claim 11 and/or wherein the cellular system (10) is configured to perform a method according to any of the claims 1 to 10.

## Patentansprüche

1. Planungsverfahren zum Planen von Benutzereinrichtungen (14, 16) in einem Mobilfunknetzwerk, umfassend die folgenden Schritte:
- Verbinden von mindestens zwei Benutzereinrichtungen (14, 16) mit einer Basisstation (12),
- wobei jede Benutzereinrichtung (14, 16) eine Planungsanforderungsnachricht an die Basisstation (12) überträgt, wobei jede Planungsanforderungsnachricht einen Pufferstatus der jeweiligen Benutzereinrichtung (14, 16) umfasst, und
- die Basisstation (12) Uplink-Ressourcen in Zeit- und Frequenzdomänen für jede der mindestens zwei Benutzereinrichtungen (14, 16) gewährt,
**dadurch gekennzeichnet, dass**
die Benutzereinrichtungen (14, 16) ihre jeweiligen Verbindungstypen kommunizieren, denen jeweils eine maximal zulässige Latenz zugewiesen ist, wobei die Basisstation (12) Uplink-Ressourcen in Zeit- und Frequenzbereichen für jede der mindestens zwei Benutzereinrichtungen (14, 16) basierend auf ihren Verbindungstypen und ihrem Pufferstatus zuweist, wobei das Planen in jedem Slot stattfindet, wobei die Basisstation (12) die Uplinks jeder der mindestens zwei Benutzereinrichtungen (14, 16) in einer Zeit unterhalb einer zuvor bestimmten Mindestzeit plant, wobei die zuvor bestimmte Mindestzeit innerhalb der Latenzanforderung liegt, die durch den Verbindungstyp definiert ist, der die strengsten Anforderungen hinsichtlich der Latenz aufweist.

2. Verfahren nach Anspruch 1, **dadurch gekennzeichnet, dass** die zuvor bestimmte Mindestzeit 1 ms, insbesondere 0,5 ms, beträgt.

3. Verfahren nach einem der vorstehenden Ansprüche,
**dadurch gekennzeichnet, dass** der Verbindungstyp einer ultrazuverlässigen Kommunikation mit geringer Latenz entspricht.

4. Verfahren nach einem der vorstehenden Ansprüche,
**dadurch gekennzeichnet, dass** sich der Pufferstatus auf einen Puffer der jeweiligen Benutzereinrichtung (14, 16) bezieht, wobei der Puffer ein Speicher der Benutzereinrichtung (14, 16) für Daten ist, die durch die Benutzereinrichtung (14, 16) zu versenden sind.

5. Verfahren nach einem der vorstehenden Ansprüche,
**dadurch gekennzeichnet, dass** der Pufferstatus in jedem Slot übertragen wird.

6. Verfahren nach einem der vorstehenden Ansprüche,
**dadurch gekennzeichnet, dass** die Slotlänge flexibel ist, wobei die Slotlänge an den verwendeten Unterträgerabstand angepasst wird.

7. Verfahren nach einem der vorstehenden Ansprüche,
**dadurch gekennzeichnet, dass** die Bandbreite, die jeder Benutzereinrichtung (14, 16) zugewiesen ist, von dem Pufferstatus der jeweiligen Benutzereinrichtung (14, 16) abhängt.

8. Verfahren nach einem der vorstehenden Ansprüche,
**dadurch gekennzeichnet, dass** die verfügbare Bandbreite proportional zu dem Pufferstatus der Benutzereinrichtungen (14, 16) in einem Slot aufgeteilt wird.

9. Verfahren nach einem der vorstehenden Ansprüche,
**dadurch gekennzeichnet, dass** die Länge des Übertragungszeitintervalls in Abhängigkeit von dem Pufferstatus der Benutzereinrichtungen (14, 16) angepasst wird.

10. Verfahren nach einem der vorstehenden Ansprüche,
**dadurch gekennzeichnet, dass** die Basisstation (12) ein g-Knoten B ist.

11. Basisstation (12) für ein Mobilfunksystem (10), das ein Mobilfunknetzwerk aufbaut, umfassend eine Schnittstelle (18) zum Aufbauen von Verbindungen mit Benutzereinrichtungen (14, 16) und eine Planereinheit (20), die mit der Schnittstelle (18) verbunden ist, wobei die Planereinheit (20) konfiguriert ist, um Planungsanforderungsnachrichten der Benutzereinrichtungen (14, 16) zu verarbeiten, wobei die Planungsanforderungsnachrichten einen Pufferstatus der jeweiligen Benutzereinrichtung (14, 16) umfassen,
**dadurch gekennzeichnet, dass** die Planereinheit (20) konfiguriert ist, um Uplink-Ressourcen in Zeit- und Frequenzdomänen für die Benutzereinrichtungen (14, 16) basierend auf ihrem übertragenen Pufferstatus und Verbindungstypen der jeweiligen Benutzereinrichtungen (14, 16) zu planen, denen jeweils eine maximal zulässige Latenz zugewiesen ist, und wobei die Planereinheit (20) konfiguriert ist, um die Slotlänge, die Länge der Übertragungszeit und/oder die Bandbreite, die jeder Benutzereinrichtung (14, 16) zugewiesen ist, abhängig von einem Unterträgerabstand und/oder dem Pufferstatus der Benutzereinrichtungen (14, 16) anzupassen, wobei die Basisstation (12) die Uplinks jedes der mindestens zwei Benutzereinrichtungen (14, 16) in einer Zeit unterhalb einer zuvor bestimmten Mindestzeit plant, wobei die zuvor bestimmte Mindestzeit innerhalb der Latenzanforderung liegt, die durch den Verbindungstyp definiert ist, der die strengsten Anforderungen hinsichtlich der Latenz aufweist.

12. Mobilfunksystem (10) zum Aufbau eines Mobilfunknetzwerks, wobei das Mobilfunksystem mindestens eine Basisstation (12) nach Anspruch 11 umfasst und/oder wobei das Mobilfunksystem (10) konfiguriert ist, um ein Verfahren nach einem der Ansprüche 1 bis 10 durchzuführen.

## Revendications

1. Procédé de programmation pour une programmation d'équipements utilisateur (14, 16) dans un réseau cellulaire, comprenant les étapes suivantes :
- la connexion d'au moins deux équipements utilisateur (14, 16) à une station de base (12),
- chaque équipement utilisateur (14, 16) transmettant un message de demande de programmation à la station de base (12), dans lequel chaque message de demande de programmation comprend un état de tampon de l'équipement utilisateur respectif (14, 16), et
- la station de base (12) accorde des ressources de liaison montante dans les domaines temporel et fréquentiel pour chacun des au moins deux équipements utilisateur (14, 16), **caractérisé en ce que**
les équipements utilisateur (14, 16) communiquent leurs types de connexion respectifs attribués à une latence maximale autorisée respectivement, dans lequel la station de base (12) accorde des ressources de liaison montante dans les domaines temporel et fréquentiel pour chacun des au moins deux équipements utilisateur (14, 16) sur la base de leurs types de connexion et de leurs états de tampon, dans lequel la programmation a lieu dans chaque créneau, dans lequel la station de base (12) programme les liaisons montantes de chacun des au moins deux équipements utilisateur (14, 16) dans un temps inférieur à un temps minimum prédéterminé, dans lequel le temps minimum prédéterminé est compris dans l'exigence de latence définie par le type de connexion ayant l'exigence la plus stricte en matière de latence.

2. Procédé selon la revendication 1, **caractérisé en ce que** le temps minimum prédéterminé est égal à 1 ms, en particulier 0,5 ms.

3. Procédé selon l'une quelconque des revendications précédentes, **caractérisé en ce que** le type de connexion correspond à une communication ultra-fiable à faible latence.

4. Procédé selon l'une quelconque des revendications précédentes, **caractérisé en ce que** l'état de tampon fait référence à un tampon de l'équipement utilisateur respectif (14, 16), dans lequel le tampon est une mémoire de l'équipement utilisateur (14, 16) pour des données destinées à être envoyées par l'équipement utilisateur (14, 16).

5. Procédé selon l'une quelconque des revendications précédentes, **caractérisé en ce que** l'état de tampon est transmis dans chaque créneau.

6. Procédé selon l'une quelconque des revendications précédentes, **caractérisé en ce que** la longueur de créneau est flexible, dans lequel la longueur de créneau est adaptée à l'espacement des sous-porteuses utilisé.

7. Procédé selon l'une quelconque des revendications précédentes, **caractérisé en ce que** la bande passante attribuée à chaque équipement utilisateur (14, 16) dépend de l'état de tampon de l'équipement utilisateur respectif (14, 16).

8. Procédé selon l'une quelconque des revendications précédentes, **caractérisé en ce que** la bande passante disponible est divisée proportionnellement aux états de tampon des équipements utilisateur (14, 16) dans un créneau.

9. Procédé selon l'une quelconque des revendications précédentes, **caractérisé en ce que** la longueur de l'intervalle de temps de transmission est adaptée en fonction des états de tampon des équipements utilisateur (14, 16).

10. Procédé selon l'une quelconque des revendications précédentes, **caractérisé en ce que** la station de base (12) est un noeud B de prochaine génération.

11. Station de base (12) pour un système cellulaire (10) établissant un réseau cellulaire, comprenant une interface (18) pour établir des connexions avec des équipements utilisateur (14, 16), et une unité de programmation (20) connectée à l'interface (18), dans laquelle l'unité de programmation (20) est configurée pour traiter des messages de demande de programmation des équipements utilisateur (14, 16), dans laquelle les messages de demande de programmation comprennent un état de tampon de l'équipement utilisateur respectif (14, 16), **caractérisée en ce que** l'unité de programmation (20) est configurée pour programmer des ressources de liaison montante dans les domaines temporels et fréquentiels pour les équipements utilisateur (14, 16) sur la base de leurs états de tampon transmis et de types de connexion des équipements utilisateur respectifs (14, 16), qui sont attribués à une latence maximale autorisée respectivement, et dans laquelle l'unité de programmation (20) est configurée pour adapter la longueur de créneau, la longueur du temps de transmission et/ou la bande passante attribuée à chaque équipement utilisateur (14, 16) en fonction d'un espacement de sous-porteuses et/ou des états de tampon des équipements utilisateur (14, 16), dans laquelle la station de base (12) programme les liaisons montantes de chacun des au moins deux équipements utilisateur (14, 16) dans un temps inférieur à un temps minimum prédéterminé, dans lequel le temps minimum prédéterminé est compris dans l'exigence de latence définie par le type de connexion ayant l'exigence la plus stricte en matière de latence.

12. Système cellulaire (10) pour établir un réseau cellulaire, dans lequel le système cellulaire comprend au moins une station de base (12) selon la revendication 11 et/ou dans lequel le système cellulaire (10) est configuré pour effectuer un procédé selon l'une quelconque des revendications 1 à 10.
